# EUROPEAN PATENT APPLICATION

(11) **EP 4 213 288 A1**
(43) Date of publication of application: **19.07.2023**
(21) Application number: 22811670.3
(22) Date of filing: 26.05.2022
(51) Int. Cl.: H01M 50/342, H01M 50/375, H01M 10/6567, H01M 10/613, H01M 10/627, H01M 10/625, H01M 50/249, H01M 50/251

(54) **COOLING DEVICE, BATTERY MODULE, POWER STORAGE SYSTEM COMPRISING SAME, AND AUTOMOBILE**

(30) Priority: 28.05.2021 KR 20210069517
(71) Applicant: LG Energy Solution, Ltd., Seoul 07335 (KR)
(72) Inventor: KEUM, Jong-Yoon, Daejeon 34122 (KR); CHOI, Bum, Daejeon 34122 (KR); KIM, Ha-Yong, Daejeon 34122 (KR); AHN, Soo-Jun, Daejeon 34122 (KR); YOON, Han-Jong, Daejeon 34122 (KR); LIM, Jong-Min, Daejeon 34122 (KR)
(74) Representative: Goddar, Heinz J.
(86) International application number: PCT/KR2022/007514
(87) International publication number: WO 2022/250479

(57) **Abstract**

Provided is a cooling device for minimizing the spread of gas and flame vented from at least one of battery cells to adjacent other battery cells. To achieve the above-described objective, the cooling device according to the present disclosure is a cooling device for cooling a plurality of battery cells, and includes a battery cell mount portion on which the plurality of battery cells is mounted on at least one surface, wherein a part of the battery cell mount portion that contacts the battery cell is configured to rupture when at least one of gas or flame is vented from the battery cell.

## Description

### TECHNICAL FIELD

The present disclosure relates to a cooling device, a battery module and an energy storage system and a vehicle comprising the battery module, and more particularly, to a cooling device for minimizing the spread of gas and flame vented from at least one of battery cells to adjacent other battery cells.

The present application claims priority to Korean Patent Application No. 10-2021-0069517 filed on May 28, 2021 in the Republic of Korea, the disclosure of which is incorporated herein by reference.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

In the lithium secondary batteries, a lithium-based oxide and a carbon material are primarily used for a positive electrode active material and a negative electrode active material, respectively. The lithium secondary battery includes an electrode assembly including a positive electrode plate and a negative electrode plate coated with the positive electrode active material and the negative electrode active material, respectively, with a separator interposed between the positive electrode plate and the negative electrode plate, and a packaging or a battery pouch packaging in which the electrode assembly is hermetically received together with an electrolyte solution.

Recently, secondary batteries are widely used in not only small devices such as mobile electronic devices but also small- and medium-sized devices such as vehicles or energy storage systems (ESSs). In the small- and medium-sized device applications, a plurality of secondary batteries is electrically connected to increase the capacity and output.

More recently, with the widespread use as an energy storage source and the growing need for high capacity structure, battery modules include a plurality of battery cells arranged with high density.

In the plurality of battery cells arranged with high density, it is necessary to cool the plurality of battery cells to effectively dissipate heat. Accordingly, the conventional battery module includes a cooling device to cool the plurality of battery cells. Additionally, in some cases, the cooling device equipped in the battery module is placed in direct contact with at least some of the battery cells to increase the heat conduction efficiency. Additionally, each of the plurality of battery cells in the conventional battery module includes a vent to release high temperature gas and flame from the battery cell in the event of thermal runaway or a fire in the battery cell.

However, in case that the vent of the battery cell is supported or blocked by the cooling device, high temperature gas and flame cannot exit the battery cell through the vent in the event of thermal runaway or a fire in the battery cell. For example, the conventional cooling device including Al plate-Al plate brazed together, each having the thickness of a few mm, blocks the vent of the battery cell. The gas and flame trapped in the battery cell increases the internal pressure of the battery cell, and any other part (the side) of the battery cell may rupture, causing gas and flame leaks. The leaking gas and flame is not directed in the intended direction of the vent and directly moves to the adjacent other battery cell, causing thermal runaway or a fire in the other battery cell. It significantly reduces the safety of the battery module.

### DISCLOSURE

### Technical Problem

The present disclosure is designed to solve the above-described problem, and therefore the present disclosure is directed to providing a cooling device for minimizing the spread of gas and flame vented from at least one of battery cells to the adjacent other battery cell, a battery module, and an energy storage system and a vehicle comprising the battery module.

These and other objectives and advantages of the present disclosure can be understood by the following description and will be clearly described by the embodiments of the present disclosure. In addition, it will be readily appreciated that the objectives and advantages of the present disclosure can be realized by the means set forth in the appended claims and a combination thereof.

### Technical Solution

To achieve the above-described objective, a cooling device according to the present disclosure is a cooling device for cooling a plurality of battery cells, and includes a battery cell mount portion on which the plurality of battery cells is mounted on at least one surface, wherein a part of the battery cell mount portion that contacts the battery cell is configured to rupture when at least one of gas or flame is vented from the battery cell.

Additionally, the battery cell mount portion may include at least one layer configured such that a part of one surface ruptures by at least one of the gas or flame.

The battery cell mount portion may include an upper plate on which the plurality of battery cells is mounted on a surface and a lower plate bonded to an opposite surface of the upper plate, and each of the upper plate and the lower plate may include a multilayer film having a thickness of 10 *µ*m to 900 *µ*m.

The multilayer film may include an outer protective layer, a reinforcement metal layer and an inner adhesive layer.

The outer protective layer may include a polymer resin having insulation properties, the metal layer may include at least one selected from the group consisting of copper (Cu), aluminum (Al), nickel (Ni), iron (Fe), carbon (C), chrome (Cr), manganese (Mn), stainless steel (SUS) and an alloy including at least two of them, and the inner adhesive layer may include a pressure sensitive adhesive substance or a hot melt polymer resin.

The reinforcement metal layer may have a thickness ranging from 1 *µ*m to 100 *µ*m.

Furthermore, the cooling device may include a coolant channel along which a cooling medium flows in the battery cell mount portion; a coolant inlet port in communication with the coolant channel, the coolant inlet port through which the cooling medium enters; and a coolant outlet port in communication with the coolant channel, the coolant outlet port through which the cooling medium exits, each of the coolant inlet port and the coolant outlet port may have an adhesive layer on an outer side, and the adhesive layer may be bonded to an inner surface of the battery cell mount portion.

In this instance, the battery cell mount portion may include an upper plate on which the plurality of battery cells is mounted on a surface, and a lower plate bonded to an opposite surface of the upper plate, each of the upper plate and the lower plate may include an outer protective layer, a reinforcement metal layer and an inner adhesive layer, and the inner adhesive layer of the upper plate and the inner adhesive layer of the lower plate may be bonded to each other.

Additionally, the battery cell mount portion may have a notch configured to tear apart by at least one of the gas or flame at the part that contacts the battery cell.

The battery cell may be a cylindrical battery cell, and the notch may have a ring shape which is concentric with the battery cell and has a smaller diameter than the battery cell.

The battery cell mount portion may include an upper plate on which the plurality of battery cells is mounted on a surface and a lower plate bonded to an opposite surface of the upper plate, each of the upper plate and the lower plate may include an outer protective layer, a reinforcement metal layer and an inner adhesive layer, and the notch may be formed by reducing a thickness of part of the reinforcement metal layer.

Furthermore, the battery cell mount portion may have an opening configured to melt by at least one of the gas or flame at the part that contacts the battery cell.

The battery cell may be a cylindrical battery cell, and the opening may have a circular shape which is concentric with the battery cell and has a smaller diameter than the battery cell.

The battery cell mount portion may include an upper plate on which the plurality of battery cells is mounted on a surface and a lower plate bonded to an opposite surface of the upper plate, each of the upper plate and the lower plate may include an outer protective layer, a reinforcement metal layer and an inner adhesive layer, and the opening may be formed by punching the reinforcement metal layer.

In addition, to achieve the above-described objective, a battery module according to the present disclosure includes the cooling device according to the present disclosure; and a plurality of battery cells mounted on at least one surface of the battery cell mount portion of the cooling device.

Additionally, the battery cell may include a vent at a part of the battery cell that contacts the cooling device, the vent configured to vent gas or flame within a body toward the cooling device when abnormal behavior of the battery cell occurs.

Additionally, the cooling device may be disposed on the plurality of battery cells, each of the plurality of battery cells may be mounted in contact with a lower surface of the cooling device, and the vent may be disposed in contact with the cooling device.

Further, the cooling device may be configured to release a cooling medium within the cooling device through the ruptured part of the battery cell mount portion.

In a preferred embodiment, the battery cell is a cylindrical battery cell with the vent on bottom, the vent configured to vent the gas or flame within a body toward the cooling device when abnormal behavior of the battery cell occurs, and the cooling device is fusion bonded to a bottom of the battery cell.

The cooling medium within the cooling device is water, and the cooling medium is fed into the vented battery cell through the ruptured part of the battery cell mount portion.

In addition, to achieve the above-described objective, an energy storage system of the present disclosure includes the battery module.

Furthermore, to achieve the above-described objective, a vehicle of the present disclosure includes the battery module.

### Advantageous Effects

According to an aspect of the present disclosure, since the present disclosure includes the battery cell mount portion on which the plurality of battery cells is mounted on at least one surface, and configured such that part of the battery cell mount portion that contacts the battery cell ruptures when at least one of gas or flame is vented from the battery cell, it is possible to prevent the vent through which gas or flame is vented from the battery cell from being blocked by the cooling device and allow the gas or flame out through the opening of the cooling member ripped open.

Accordingly, as opposed to the conventional art, the present disclosure may prevent high temperature gas and flame from being vented from the side of the battery cell due to the side rupture of the battery cell by the trapped gas or flame. Accordingly, it is possible to prevent the gas and flame vented from the battery cell from moving to the adjacent other battery cell, thereby preventing thermal runaway or a fire in the other battery cell. Accordingly, it is possible to greatly increase the safety of the battery module.

In particular, when the battery cell has the vent, the vent makes it easy for the cooling device to rupture in the event of a fire in the battery cell, thereby effectively venting the gas or flame from the battery cell through the vent. Since the neighboring battery cells adjacent to the vented battery cell are protected through the cooling device, it is possible to prevent the direct contact of the flame vented through venting in the cell in which the fire occurred with the neighboring battery cells, thereby ensuring the safety.

According to another aspect of the present disclosure, since the present disclosure includes the upper plate on which the plurality of battery cells is mounted and the lower plate bonded to the upper plate, it is possible to bring the plurality of battery cells into direct contact with the cooling device without an addition of a heat conduction member interposed between, thereby increasing the cooling efficiency. Since each of the upper plate and the lower plate includes a multilayer film having a thickness of 10 *µ*m to 900 *µ*m, it is possible to easily rupture by gas or flame vented from the battery cell compared to the conventional cooling device including Al plate-Al plate, each having the thickness of a few mm.

According to another aspect of the present disclosure, since the lower plate of the cooling device is fusion bonded to the other surface of the upper plate, it is possible to perform the assembly process of the cooling device without any fastening member. Accordingly, compared to the conventional art, the present disclosure may reduce the number of components and shorten the manufacturing time, thereby reducing the manufacturing cost.

Additionally, according to another aspect of the present disclosure, since the outer periphery of the upper plate and the outer periphery of the lower plate are fusion bonded to each other, the present disclosure may further increase the bond strength between them. Accordingly, the present disclosure may prevent the cooling medium from leaking through a gap between the upper plate and the lower plate due to cracking in the cooling device when external impacts occur during the use of the battery module.

### DESCRIPTION OF DRAWINGS

The accompanying drawings illustrate the exemplary embodiment of the present disclosure and together with the following detailed description, serve to provide further understanding of the technical features of the present disclosure, and thus, the present disclosure should not be construed as being limited to the drawings.
FIG. 1 is a perspective view schematically showing a battery module according to an embodiment of the present disclosure.
FIG. 2 is a perspective view schematically showing a cooling device according to an embodiment of the present disclosure.
FIG. 3 is a bottom perspective view schematically showing a cooling device according to an embodiment of the present disclosure.
FIG. 4 is a partial cross-sectional view schematically showing parts of a battery cell of a battery module according to an embodiment of the present disclosure.
FIG. 5 is a partial cross-sectional view schematically showing a battery module according to an embodiment of the present disclosure.
FIG. 6 is a partial cross-sectional view schematically showing parts of a cooling device according to an embodiment of the present disclosure.
FIG. 7 is a partial enlarged cross-sectional view of section A in the cooling device of FIG. 6.
FIG. 8 is a bottom perspective view schematically showing a coolant inlet port of a cooling device according to an embodiment of the present disclosure.
FIG. 9 is a plan view schematically showing a cooling device according to another embodiment of the present disclosure.
FIG. 10 is a cross-sectional view of FIG. 9 taken along the line X-X'.
FIG. 11 is a plan view schematically showing a cooling device according to still another embodiment of the present disclosure.
FIG. 12 is a cross-sectional view of FIG. 11 taken along the line XII-XII'.
FIG. 13 is another cross-sectional view of FIG. 11 taken along the line XII-XII'.
FIG. 14 is a bottom perspective view schematically showing a battery module according to another embodiment of the present disclosure.
FIG. 15 is a partial cross-sectional view schematically showing parts of the battery module of FIG. 14.
FIG. 16 is a diagram schematically showing a vehicle according to an embodiment of the present disclosure.
FIG. 17 is a perspective view schematically showing an energy storage system according to an embodiment of the present disclosure.

### BEST MODE

Hereinafter, the exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just an exemplary embodiment of the present disclosure, but not intended to fully describe the technical aspects of the present disclosure, so it should be understood that a variety of other equivalents and modifications could have been made thereto at the time that the application was filed.

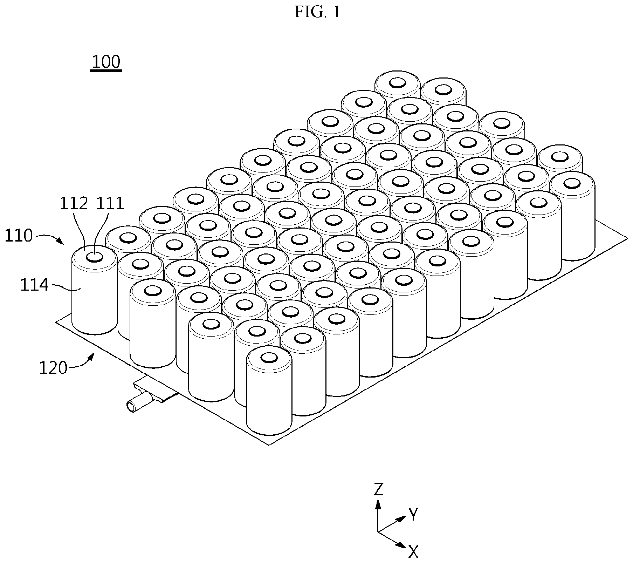

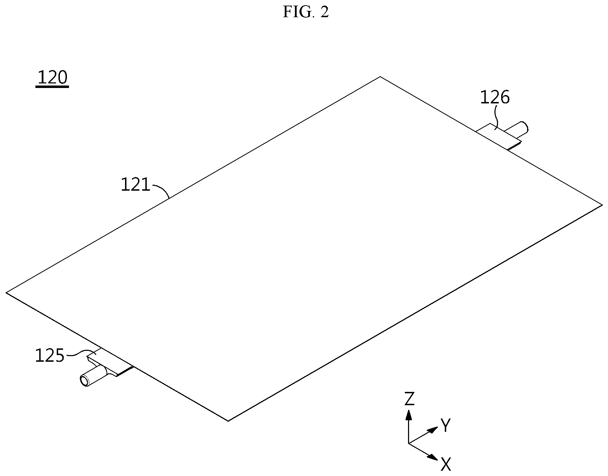

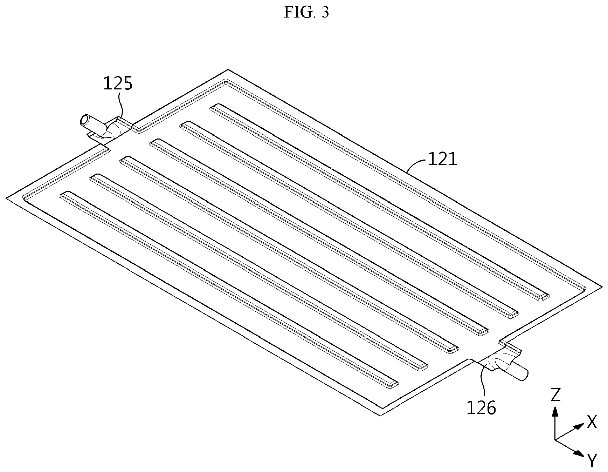

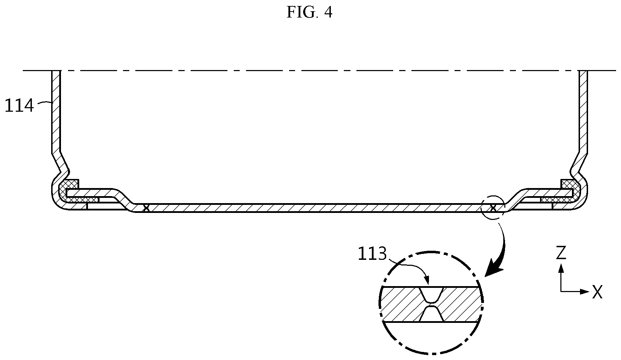

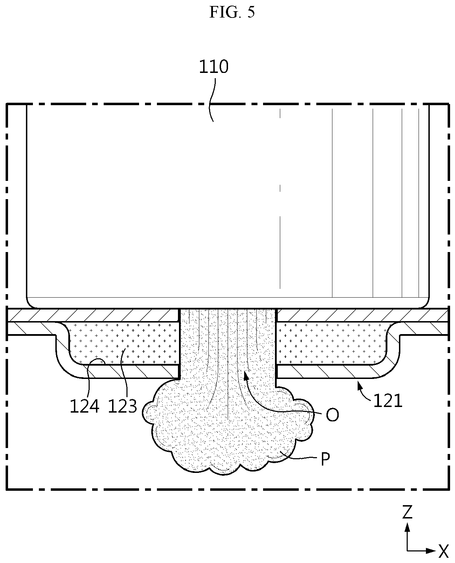

FIG. 1 is a perspective view schematically showing a battery module according to an embodiment of the present disclosure. FIG. 2 is a perspective view schematically showing a cooling device according to an embodiment of the present disclosure. FIG. 3 is a bottom perspective view schematically showing the cooling device according to an embodiment of the present disclosure. FIG. 4 is a partial cross-sectional view schematically showing parts of a battery cell of the battery module according to an embodiment of the present disclosure. Additionally, FIG. 5 is a partial cross-sectional view schematically showing the battery module according to an embodiment of the present disclosure. For reference, in FIG. 1, the X axis direction is the left direction, the Y axis direction is the rear direction, and the Z axis direction is the upward direction.

Referring to FIGS. 1 to 5, the battery module 100 according to an embodiment of the present disclosure includes a plurality of battery cells 110 and a cooling device 120. The cooling device 120 according to an embodiment of the present disclosure may be a device for cooling the plurality of battery cells 110. The plurality of battery cells 110 may be mounted on one side of the cooling device 120. The cooling device 120 may be configured to cool the plurality of battery cells 110 by the conduction of heat generated from the plurality of battery cells 110 mounted on one side. For example, the cooling device 120 may contain a cooling medium 123 therein. Alternatively, the cooling device 120 may be configured to feed the chilled cooling medium into the body from the outside and release the heated cooling medium to the outside.

Here, the battery cell 110 may be a can-type secondary battery. For example, the battery cell 110 may be a cylindrical battery cell or a prismatic battery cell. In this embodiment, the cylindrical battery cell is taken as an example. The battery cell 110 may include a cylindrical battery can 114. The battery cell 110 may include both a positive electrode terminal 111 and a negative electrode terminal 112 on top of the battery can 114. Although not shown in the drawing, for example, an electrical insulating member may be interposed between the positive electrode terminal 111 and the negative electrode terminal 112. That is, the electrical insulating member may prevent the electrical connection between the positive electrode terminal 111 and the negative electrode terminal 112.

The plurality of battery cells 110 may be arranged, for example, at a predetermined interval of 3 to 5 mm. Additionally, the plurality of battery cells 110 in a row and the plurality of battery cells 110 in another row may be disposed at different positions in the anterior-posterior direction (X axis direction in FIG. 1). Additionally, the plurality of battery cells 110 in a column and the plurality of battery cells 110 in another column may be disposed at different positions in the left-right direction (Y axis direction in FIG. 1). That is, the plurality of battery cells 110 may be arranged in a zigzag pattern in the front, rear, left and right directions as a whole. This arrangement may increase the integration density of the battery cells 110.

Additionally, although not shown, the battery module 100 of the present disclosure may include the plurality of battery cells 110 electrically connected, for example, through a busbar or an electrical wire. That is, the battery module 100 of the present disclosure may include the plurality of battery cells 110 electrically connected by the contact of the positive electrode terminal 111 and the negative electrode terminal 112 of each of the plurality of battery cells 110 with the busbar or the electrical wire.

The plurality of battery cells 110 may be, at the bottom, fixed to the cooling device 120 by heat fusion. That is, the cooling device 120 may have a bottom cooling structure.

Additionally, the cooling device 120 may include a battery cell mount portion 121 configured such that part of the battery cell mount portion 121 that contacts the battery cell 110 ruptures when at least one of gas or flame P is vented from the battery cell 110. Here, when abnormal behavior such as an internal short circuit or thermal runaway occurs, at least one of the gas or flame may be vented from the battery cell 110. In this instance, the battery cell mount portion 121 may be configured such that part of the battery cell mount portion 121 that contacts the battery cell 110 ruptures by at least one of the gas or flame. The battery cell mount portion 121 may rupture as it melts away or is partially torn apart by at least one of the vented gas or flame. In this instance, at least one of the gas or flame vented from the battery cell 110 may move in a direction opposite the direction in which the plurality of battery cells 110 is mounted through an opening O in the battery cell mount portion 121.

According to this configuration of the present disclosure, since the present disclosure includes the battery cell mount portion 121 on which the plurality of battery cells 110 is mounted on at least one surface and configured such that part of the battery cell mount portion 121 that contacts the battery cell 110 ruptures when at least one of gas or flame is vented from the battery cell 110, it is possible to prevent a vent 113 through which the gas or flame from the battery cell 110 is vented from being trapped by the cooling device 120, and allow the gas or flame out through the opening O of the cooling member. Accordingly, as opposed to the conventional art, the present disclosure may prevent high temperature gas and flame from being vented from the side of the battery cell 110 due to the side rupture of the battery cell 110 by the trapped gas or flame. Accordingly, it is possible to prevent the gas and flame vented from the battery cell 110 from moving to the adjacent other battery cell 110, thereby preventing thermal runaway or fire in the other battery cell 110. Accordingly, it is possible to greatly increase the safety of the battery module 100. That is, the cooling device 120 does not block the vent 113 of the battery cell 110, and when flame is vented through the vent 113 of the battery cell 110, the cooling device 120 easily ruptures. It is possible to prevent flame venting by the side rupture of the battery cell 110 and prevent fire propagation caused by the direct exposure of the neighboring battery cells to the flame. Since the cooling device 120 acts as a primary barrier when a fire occurs in any one battery cell 110, it is possible to effectively prevent the propagation of the fire to the other battery cell 110.

In particular, as shown in this embodiment, when the battery cell 110 includes the vent 113 at the bottom thereof, the vent 113 makes it easy for the cooling device 120 to rupture in the event of a fire in the battery cell 110, thereby effectively venting the gas or flame from the battery cell 110 through the vent 113. Since the neighboring other battery cells 110 adjacent to the vented battery cell 110 are protected through the cooling device 120, it is possible to prevent the direct contact of the flame vented through the venting in the cell in which the fire occurred with the neighboring battery cells 110, thereby ensuring the safety.

In this embodiment, since the vent 113 is disposed at the bottom of the battery cell 110 and the cooling device 120 is below the battery cell 110, when overheat or a fire occurs due to an abnormal situation of the battery cell 110, the vent 113 allows gas or flame to be vented through the bottom of the battery module 100, not the top or the side of the battery module 100. For example, when the battery module 100 is provided in a vehicle, in general, a driver or passenger's seat is above the battery module 100, so it is possible to ensure the safety of the passenger to the maximum extent through the guidance of the gas or flame to the bottom of the battery module 100.

The battery cell 110 may be a cylindrical battery cell as mentioned above, especially, for example, a cylindrical battery cell with the form factor ratio (defined as the product of dividing the diameter of the cylindrical battery cell by its height, i.e., a height (H)-to-diameter (Φ) ratio) of more than about 0.4. Here, the form factor refers to a value indicating the diameter and height of the cylindrical battery cell. The cylindrical battery cell according to an embodiment of the present disclosure may be, for example, 46110 cell, 48750 cell, 48110 cell, 48800 cell and 46800 cell. In the numbers indicating the form factor, the first two numbers indicate the diameter of the cell, the next two numbers indicate the height of the cell, and the last number 0 indicates that the cross section of the cell is circular.

The conventional battery module includes battery cells with the form factor of about 0.4 or less. For example, 1865 cell and 2170 cell have been used. In contrast, the battery cell 110 included in the battery module 100 of the present disclosure is a large-scale battery cell. Accordingly, the battery module 100 of the present disclosure is more suitable for high capacity and high output. Additionally, the improved cooling device 120 makes the battery module 100 of the present disclosure especially suitable as an automobile battery module requiring high capacity and high output.

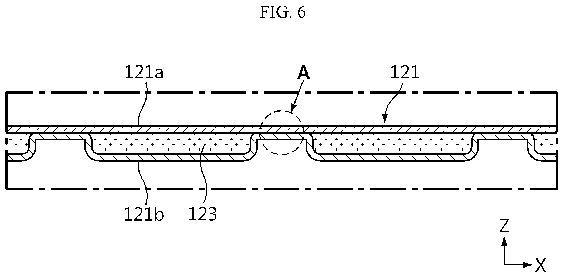

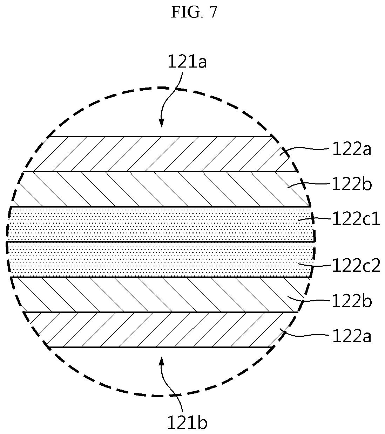

FIG. 6 is a partial cross-sectional view schematically showing parts of the cooling device according to an embodiment of the present disclosure. Additionally, FIG. 7 is a partial enlarged cross-sectional view of section A in the cooling device of FIG. 6.

Referring to FIGS. 6 and 7, the battery cell mount portion 121 may include at least one layer configured such that part of one surface of the layer ruptures by at least one of gas or flame. For example, the at least one layer of the battery cell mount portion 121 may include a multilayer film having a thickness of 10 *µ*m to 900 *µ*m. Preferably, the at least one layer of the battery cell mount portion 121 may include an outer protective layer 122a, a reinforcement metal layer 122b and a first inner adhesive layer 122c1. The outer protective layer 122a may be on one surface of the reinforcement metal layer 122b and include a polymer resin having insulation properties. The insulating polymer resin of the outer protective layer 122a may include at least one selected from the group consisting of polyethylene, polypropylene, polyester, polyethylene terephthalate (PET), nylon, vinyl chloride, polyimide and polyphenylene sulfide. The outer protective layer 122a may be made of an abrasion resistant material.

The reinforcement metal layer 122b may include at least one selected from the group consisting of copper (Cu), aluminum (Al), nickel (Ni), iron (Fe), carbon (C), chrome (Cr), manganese (Mn), stainless steel (SUS) and an alloy including at least two of them. Additionally, the thickness of the reinforcement metal layer 122b ranges from 1 *µ*m to 100 *µ*m. Additionally, the first inner adhesive layer 122c1 may include a pressure sensitive adhesive substance or a hot melt polymer resin. Here, the pressure sensitive adhesive substance may include at least one selected from the group consisting of an acrylic adhesive compound, a rubber-based adhesive compound, a silicone-based adhesive compound and a vinyl ether-based adhesive compound. The first inner adhesive layer 122c1 may be, for example, a cast polypropylene (CPP) film.

As described above, the layer of the battery cell mount portion 121 may be the film having the thickness of 10 *µ*m to 900 *µ*m. The cooling device 120 formed of the film may be defined as a 'thin film' cooling device compared to the conventional cooling device using Al plates having the thickness of a few mm. The conventional cooling device including Al plate-Al plate, each having the thickness of a few mm, does not rupture by gas or flame vented from the battery cell. When the layer of the battery cell mount portion 121 is the multilayer film having the above-described thickness, compared to the conventional cooling device, the cooling device of the present disclosure easily ruptures by gas or flame vented from the battery cell 110. Additionally, since the battery cell mount portion 121 is the film having the thickness of 10 *µ*m to 900 *µ*m, it is lighter than the conventional Al plate having the thickness of a few mm. Accordingly, it is possible to further reduce the thickness and weight of the battery module 100 including the cooling device 120 and increase the energy density per volume and the energy density per weight.

Additionally, as shown in FIG. 6, the battery cell mount portion 121 may include the at least one layer. For example, as shown in FIG. 7, the battery cell mount portion 121 may include an upper plate 121a and a lower plate 121b. The plurality of battery cells 110 is mounted on one surface of the upper plate 121a. For example, the upper plate 121a may have a plate shape of a predetermined size enough to mount the plurality of battery cells 110 on one surface (the upper surface). The said surface of the upper plate 121a may be flat. In another example, the upper plate 121a may include a structure such as protrusions to define the location at which each battery cell 110 is mounted.

The lower plate 121b may be bonded to the other surface on which the plurality of battery cells 110 of the upper plate 121a is not mounted. The lower plate 121b may have an upper surface corresponding to the in-plane size of the upper plate 121a. That is, the lower plate 121b may have an outer periphery corresponding to the outer periphery of the upper plate 121a.

The upper plate 121a may include at least one layer. Additionally, the lower plate 121b may include at least one layer. For example, as shown in FIG. 7, the upper plate 121a may have a triple layer stack configuration in the vertical direction, including an outer protective layer 122a at the top, a reinforcement metal layer 122b in the middle and a first inner adhesive layer 122c1 at the bottom. The lower plate 121b may have a triple layer stack configuration in the vertical direction, including a second inner adhesive layer 122c2 at the top, a reinforcement metal layer 122b in the middle and an outer protective layer 122a at the bottom. In this instance, the first inner adhesive layer 122c1 of the upper plate 121a and the second inner adhesive layer 122c2 of the lower plate 121b may be bonded to each other. For example, each of the two adhesive layers 122c1, 122c2 may include a hot melt polymer resin. The two adhesive layers may be fusion bonded to each other. Accordingly, the outer periphery of the lower plate 121b and the outer periphery of the upper plate 121a may be fusion bonded to each other. For example, in case that CPP films are used for the two adhesive layers 122c1, 122c2, they are melted to form a hermetic seal when heated.

Referring further to FIG. 6, the lower plate 121b may have ridges protruding toward the upper plate 121a in cross section. Here, the ridge protruding toward the upper plate 121a may be the upper surface of each of the wall of the lower plate 121b and the outer periphery of the lower plate 121b. Further, the outer periphery of the upper plate 121a and the outer periphery of the lower plate 121b may be fusion bonded to each other.

Since the first inner adhesive layer 122c1 of the upper plate 121a and the second inner adhesive layer 122c2 of the lower plate 121b are bonded to each other, it is possible to perform the assembly process of the cooling device 120 without any fastening member. Accordingly, compared to the conventional art, the present disclosure may reduce the number of components and shorten the manufacturing time, thereby reducing the manufacturing cost. Additionally, since the outer periphery of the upper plate 121a and the outer periphery of the lower plate 121b are fusion bonded to each other, the bond strength between them may be further increased. Accordingly, the present disclosure may prevent the cooling medium 123 from leaking through the gap between the upper plate 121a and the lower plate 121b due to cracking in the cooling device 120 when external impacts occur during the use of the battery module 100.

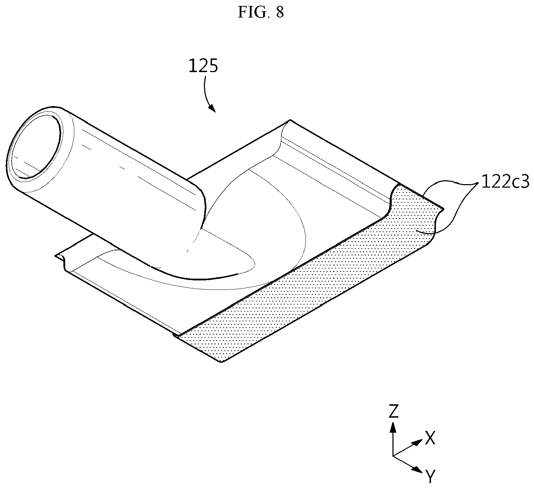

FIG. 8 is a bottom perspective view schematically showing a coolant inlet port of the cooling device according to an embodiment of the present disclosure.

Referring to FIG. 8 together with FIGS. 1, and 2, the cooling device 120 according to an embodiment of the present disclosure may include the cooling medium 123, a coolant channel 124, a coolant inlet port 125 and a coolant outlet port 126. Here, the cooling medium 123, may be, for example, water.

The coolant channel 124 may be a passage along which the cooling medium 123 flows in the internal space of the battery cell mount portion 121. For example, the coolant channel 124 may be a gap between the upper plate 121a and the lower plate 121b. The coolant channel 124 may be equipped in the lower plate 121b. The coolant channel 124 is an empty space protruding downward to allow the coolant to flow. The lower plate 121b may include walls protruding upward from the bottom of the coolant channel 124 to form the empty space. The coolant inlet port 125 may be in communication with the coolant channel 124 to feed the flow of the chilled cooling medium 123 into the body from the outside. For example, the coolant inlet port 125 may be disposed at the front end of the battery cell mount portion 121. The coolant outlet port 126 may be in communication with the coolant channel 124 to allow the heated cooling medium 123 to exit. The coolant outlet port 126 may be disposed, for example, at the rear end of the battery cell mount portion 121.

Additionally, each of the coolant inlet port 125 and the coolant outlet port 126 may have a third adhesive layer 122c3 on the outer side thereof, and the third adhesive layer 122c3 may be bonded to the inner surface of the battery cell mount portion 121. The third adhesive layer 122c3 may include a pressure sensitive adhesive substance or a hot melt polymer resin. For example, the third adhesive layer 122c3 may be the same as a third adhesive layer 122c3 of the battery cell mount portion 121. The third adhesive layer 122c3 of each of the coolant inlet port 125 and the coolant outlet port 126 and the third adhesive layer 122c3 of the battery cell mount portion 121 may be bonded to each other.

According to this configuration of the present disclosure, since the cooling device 120 of the present disclosure includes the upper plate 121a on which the plurality of battery cells 110 is mounted and the lower plate 121b bonded to the upper plate 121a, it is possible to bring the plurality of battery cells 110 into direct contact with the upper surface of the cooling device 120 without an addition of a heat conduction member interposed between, thereby increasing the cooling efficiency.

Additionally, since each of the coolant inlet port 125 and the coolant outlet port 126 has the third adhesive layer 122c3 on the outer side thereof and the third adhesive layer 122c3 is bonded to the inner surface of the battery cell mount portion 121, it is possible to easily bond the third adhesive layer 122c3 of each of the coolant inlet port 125 and the coolant outlet port 126 and the third adhesive layer 122c3 of the battery cell mount portion 121 together. Accordingly, it is possible to effectively increase the sealability at the connected part of each of the coolant inlet port 125 and the coolant outlet port 126 and the coolant channel 124 of the battery cell mount portion 121, and since the bonding method between the port and the battery cell mount portion 121 is the same as the bonding method of the battery cell mount portion 121, it is possible to simplify the fabrication process of the cooling device 120, thereby greatly increasing the fabrication efficiency.

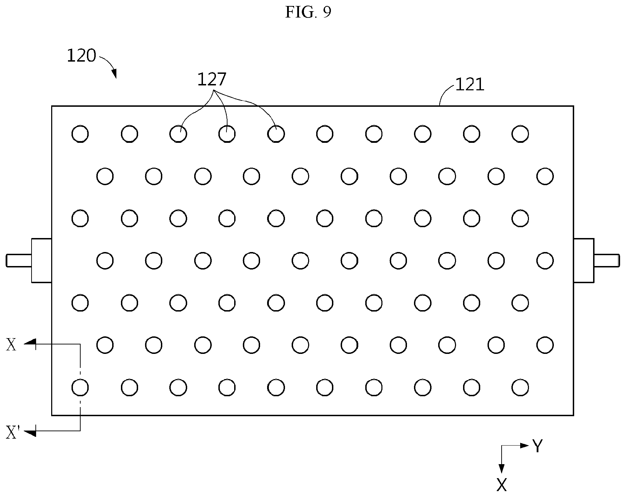

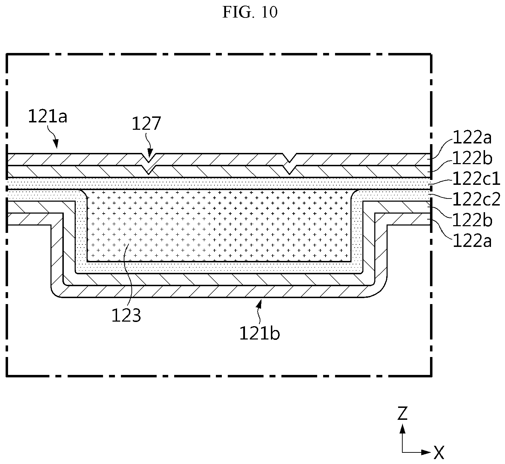

FIG. 9 is a plan view schematically showing a cooling device according to another embodiment of the present disclosure. FIG. 10 is a cross-sectional view of FIG. 9 taken along the line X-X'.

Referring to FIGS. 9 and 10 together with FIGS. 1 and 4, the cooling device 120 according to another embodiment of the present disclosure may be the same as the cooling device 120 of FIG. 2, except a notch 127. The battery cell mount 121 may have the notch 127 at part of the battery cell mount portion 121 that contacts the battery cell 110, and the notch 127 may tear apart by at least one of gas or flame. The notch 127 at the part of the battery cell mount portion 121 may be thinner than the remaining part of the battery cell mount portion 121. The notch 127 may tear apart by gas or flame vented from the battery cell 110 more easily than the remaining part of the battery cell mount portion 121. For example, as shown in FIG. 9, the battery cell mount portion 121 of the cooling device 120 may have the notch 127 at part of the battery cell mount portion 121 that contacts each of the plurality of battery cells 110. In particular, when the battery cell 110 is a cylindrical battery cell, the notch 127 may have a ring shape that is concentric with the battery cell 110 and has a smaller diameter than the battery cell 110.

Additionally, when the upper plate 121a includes the outer protective layer 122a, the reinforcement metal layer 122b and the first inner adhesive layer 122c1, the notch 127 may be formed by reducing the thickness of part of the reinforcement metal layer 122b. The notch 127 may be formed in the multilayer thin film including the outer protective layer 122a, the reinforcement metal layer 122b and the first inner adhesive layer 122c1, and may be formed by reducing the thickness less than the remaining part by pressing or drilling parts of the outer protective layer 122a and the reinforcement metal layer 122b.

According to this configuration of the present disclosure, since the present disclosure includes the notch 127 configured to tear apart by at least one of gas or flame at the part that contacts the battery cell 110, part of the battery cell mount portion 121 may rupture with higher reliability through the notch 127. Accordingly, the present disclosure may prevent the vent 113 (as described below) through which gas or flame from the battery cell 110 is vented from being blocked by the cooling device 120, and allow the gas or flame out through the opening of the cooling member ripped open. Accordingly, the present disclosure may significantly increase the safety of the battery module 100.

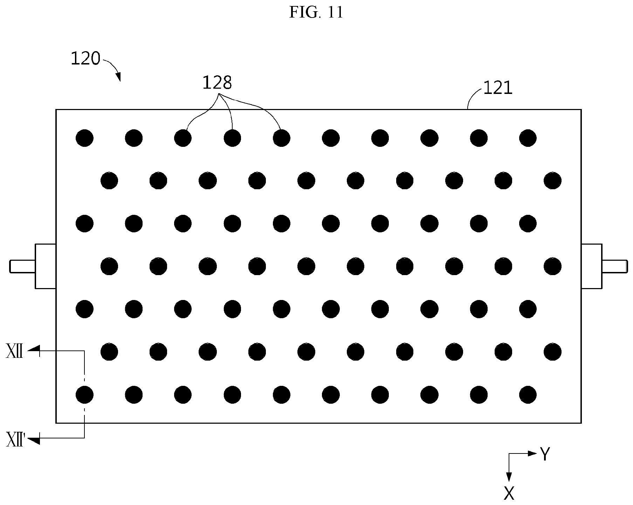

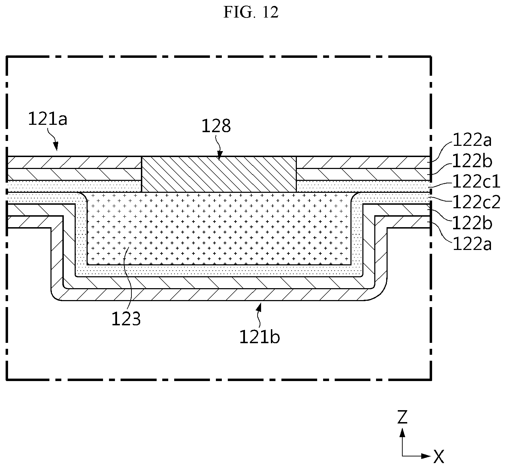

FIG. 11 is a plan view schematically showing a cooling device according to still another embodiment of the present disclosure. FIG. 12 is a cross-sectional view of FIG. 11 taken along the line XII-XII'. Referring to FIGS. 11 and 12 together with FIGS. 1 and 4, the cooling device 120 according to still another embodiment of the present disclosure may be the same as the cooling device 120 of FIG. 2, except an opening 128. The battery cell mount portion 121 may have the opening 128 configured to melt by at least one of gas or the flame at part of the battery cell mount portion 121 that contacts the battery cell 110. In particular, when the battery cell 110 is a cylindrical battery cell, the opening 128 may have a circular shape that is concentric with the battery cell 110 and has a smaller diameter than the battery cell 110. The opening 128 may include, for example, a polymer resin having insulation properties and thermoplastic properties. For example, the opening 128 may include at least one of polyethylene, polyethylene terephthalate, polyvinyl chloride, polyvinylidene chloride, polystyrene or polypropylene. The opening 128 may be formed by forming a hole in the upper plate 121a and filling the hole with the polymer resin having insulation properties and thermoplastic properties.

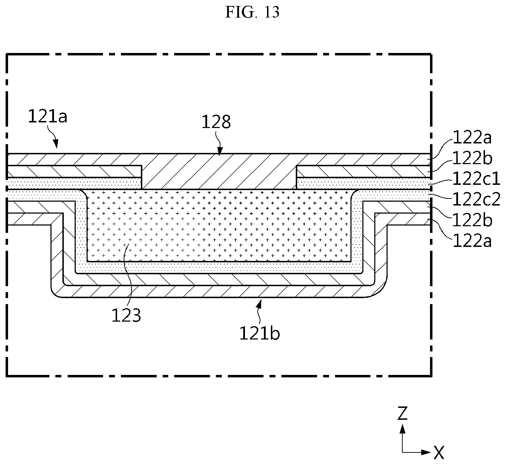

FIG. 13 is another cross-sectional view of FIG. 11 taken along the line XII-XII'. The opening 128 may be formed without forming a hole in the upper plate 121a. When the upper plate 121a includes the outer protective layer 122a, the reinforcement metal layer 122b and the first inner adhesive layer 122c 1, the opening 128 may be formed by punching the reinforcement metal layer 122b. The outer protective layer 122a covers the punched reinforcement metal layer 122b, but since the outer protective layer 122a can melt well, the upper plate 121a easily ruptures compared to the unpunched reinforcement metal layer 122b.

According to this configuration of the present disclosure, since the present disclosure further includes the opening 128 configured to melt by at least one of gas or flame at the part that contacts the battery cell 110, when at least one of the gas or flame is vented from the battery cell 110, part of the battery cell mount portion 121 may rupture with high reliability through the opening 128 configured to melt by the gas or flame. Accordingly, the present disclosure prevents the vent 113 through which the gas or flame from the battery cell 110 is vented from being blocked by the cooling device 120 and allow the gas or flame out through the opening of the cooling member ripped open. Accordingly, the present disclosure may significantly improve the safety of the battery module 100.

Referring back to FIGS. 1 and 4, the battery module 100 according to an embodiment of the present disclosure includes the cooling device 120 and the plurality of battery cells 110. The battery cell 110 may be mounted on at least one surface of the battery cell mount portion 121 of the cooling device 120. The cooling device 120 may be fusion bonded to the bottom of the battery cell 110.

Furthermore, the battery cell 110 may include the vent 113 at part that contacts the cooling device 120 to transport gas or flame within the body toward the cooling device 120 when abnormal behavior of the battery cell 110 occurs. For example, the vent 113 may be the part of the battery can 114 having lower mechanical strength than the other part. For example, as shown in FIG. 4, the battery cell 110 may include the vent 113 at the bottom. The vent 113 may be where part of the bottom of the battery can 114 is thinner. Although not shown, the vent 113 may have a ring shape on the bottom. When the internal gas pressure is equal to or higher than the predetermined level, the battery cell 110 may rupture in a circular shape along the vent 113, and the gas or flame may be vented from the battery cell 110 more easily. The vent 113 may be in the shape of an opening or a notch having a predetermined size. Furthermore, the vent 113 may further include a film in the opening of the predetermined size and the film ruptures under the pressure of the predetermined level or above.

According to this configuration of the present disclosure, since the present disclosure includes the vent 113 at the part that contacts the cooling device 120 to vent the gas or flame within the body when abnormal behavior of the battery cell 110 occurs, it is possible to prevent the gas and flame vented from the battery cell 110 from moving to the adjacent other battery cell 110 and allow the gas and flame out through the opening of the battery cell mount portion 121 of the cooling device 120 ripped open, thereby preventing thermal runaway or a fire in the other battery cell 110. Accordingly, it is possible to greatly increase the safety of the battery module 100.

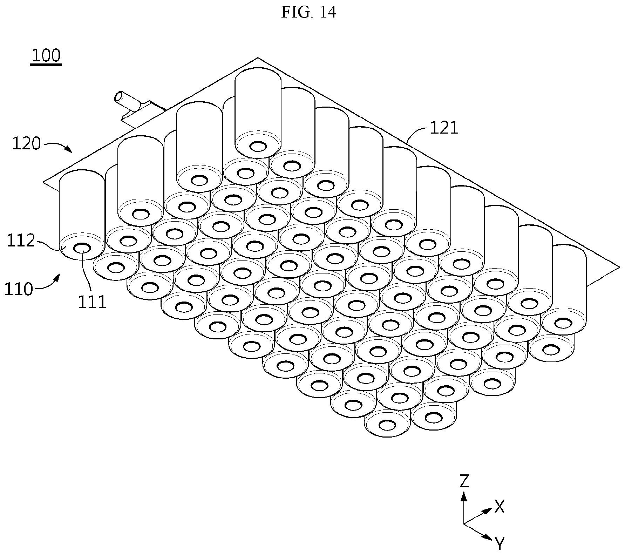

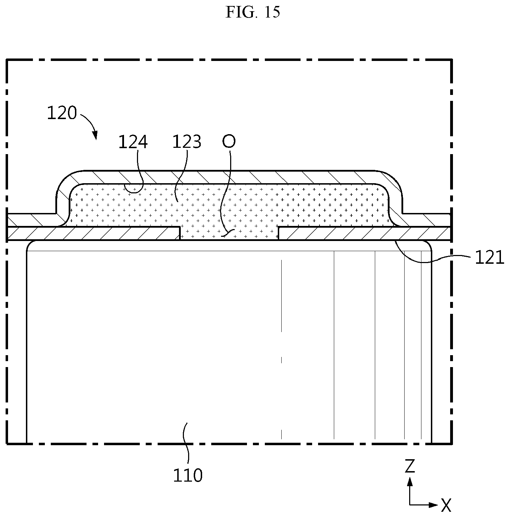

FIG. 14 is a bottom perspective view schematically showing a battery module according to another embodiment of the present disclosure. Additionally, FIG. 15 is a partial cross-sectional view schematically showing parts of the battery module of FIG. 14.

Referring to FIGS. 14 and 15, the battery module 100 according to another embodiment of the present disclosure may have the same configuration as the battery module 100 of FIG. 1, except the position of the plurality of battery cells 110 and the cooling device 120.

Specifically, the battery module 100 of FIG. 14 may include the cooling device 120 on the plurality of battery cells 110. Additionally, the plurality of battery cells 110 may be positioned upside down. That is, as opposed to the battery module 100 of FIG. 1, each of the plurality of battery cells 110 may include the vent 113 at the top and the positive electrode terminal 111 and the negative electrode terminal 112 at the bottom. Additionally, the lower surface of the cooling device 120 of the battery module 100 of FIG. 14 may be in contact with the vent 113 of each of the plurality of battery cells 110.

Additionally, the cooling device 120 may be configured to release the cooling medium 123 from inside to outside through the ruptured part of the battery cell mount portion 121. That is, when at least one of gas or flame is vented through the vent 113 due to abnormal behavior of at least one of battery cells 110, the part of the battery cell mount portion 121 of the cooling device 120 may rupture, and the cooling medium 123 contained in the cooling device 120 may be released through the opening O. The released cooling medium 123 may move to the plurality of battery cells 110 to directly cool the plurality of battery cells 110.

According to this configuration of the present disclosure, since the cooling device 120 is positioned on the plurality of battery cells 110, each of the plurality of battery cells 110 is mounted in contact with the lower surface of the cooling device 120 and the vent 113 is placed in contact with the cooling device 120, when at least one of gas or flame is vented through the vent 113 in the event of abnormal behavior of at least one of battery cells 110, part of the battery cell mount portion 121 of the cooling device 120 may rupture, and the cooling medium 123 contained in the cooling device 120 may be released through the opening O. Since the released cooling medium 123 moves to the plurality of battery cells 110 to directly cool the plurality of battery cells 110, it is possible to stop a fire in the battery module 100 and prevent the spread of thermal runaway to the plurality of battery cells 110. That is, when venting occurs in at least one of the battery cells 110, gas or flame from the vented battery cell 110 is directed toward the cooling device 120, and accordingly part of the battery cell mount portion 121 ruptures and the cooling medium 123, for example, water, inside the cooling device 120 is immediately fed into the vented battery cell 110 through the ruptured part of the battery cell mount portion 121, thereby stopping a thermal event, for example, a fire in the cell immediately at the early stage.

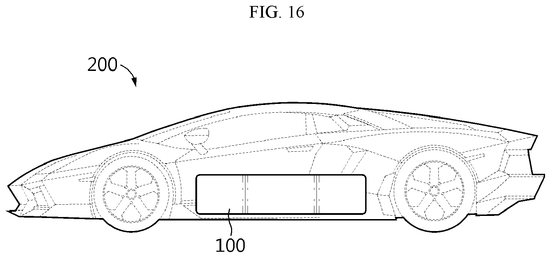

FIG. 16 is a diagram schematically showing a vehicle according to an embodiment of the present disclosure.

Referring to FIG. 16, the battery module 100 according to an embodiment of the present disclosure may be included in the vehicle 200 such as an electric vehicle or a hybrid electric vehicle. That is, the vehicle 200 according to an embodiment of the present disclosure may include the battery module 100 mounted in the vehicle body.

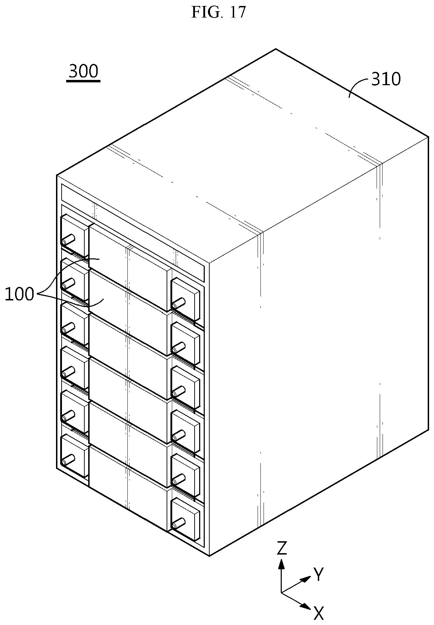

FIG. 17 is a perspective view schematically showing an energy storage system according to an embodiment of the present disclosure.

Referring to FIG. 17, a battery rack 300 of the present disclosure includes a plurality of battery modules 100 and a rack case 310. The plurality of battery modules 100 may be vertically arranged and received in the rack case 310.

Meanwhile, the terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the appended claims and equivalents thereof.

## Claims

1. A cooling device for cooling a plurality of battery cells, comprising:
a battery cell mount portion on which the plurality of battery cells is mounted on at least one surface, wherein a part of the battery cell mount portion that contacts the battery cell is configured to rupture when at least one of gas or flame is vented from the battery cell.

2. The cooling device according to claim 1, wherein the battery cell mount portion includes at least one layer configured such that a part of one surface ruptures by at least one of the gas or flame.

3. The cooling device according to claim 1, wherein the battery cell mount portion includes an upper plate on which the plurality of battery cells is mounted on a surface and a lower plate bonded to an opposite surface of the upper plate, and
wherein each of the upper plate and the lower plate includes a multilayer film having a thickness of 10 *µ*m to 900 *µ*m.

4. The cooling device according to claim 3, wherein the multilayer film includes an outer protective layer, a reinforcement metal layer and an inner adhesive layer.

5. The cooling device according to claim 4, wherein the outer protective layer includes a polymer resin having insulation properties, the metal layer includes at least one selected from the group consisting of copper (Cu), aluminum (Al), nickel (Ni), iron (Fe), carbon (C), chrome (Cr), manganese (Mn), stainless steel (SUS) and an alloy including at least two of them, and the inner adhesive layer includes a pressure sensitive adhesive substance or a hot melt polymer resin.

6. The cooling device according to claim 5, wherein the reinforcement metal layer has a thickness ranging from 1 *µ*m to 100 *µ*m.

7. The cooling device according to claim 1, wherein the cooling device comprises:
a coolant channel along which a cooling medium flows in the battery cell mount portion;
a coolant inlet port in communication with the coolant channel, the coolant inlet port through which the cooling medium enters; and
a coolant outlet port in communication with the coolant channel, the coolant outlet port through which the cooling medium exits, and
wherein each of the coolant inlet port and the coolant outlet port has an adhesive layer on an outer side, and the adhesive layer is bonded to an inner surface of the battery cell mount portion.

8. The cooling device according to claim 7, wherein the battery cell mount portion includes an upper plate on which the plurality of battery cells is mounted on a surface, and a lower plate bonded to an opposite surface of the upper plate,
wherein each of the upper plate and the lower plate includes an outer protective layer, a reinforcement metal layer and an inner adhesive layer, and
wherein the inner adhesive layer of the upper plate and the inner adhesive layer of the lower plate are bonded to each other.

9. The cooling device according to claim 1, wherein the battery cell mount portion has a notch configured to tear apart by at least one of the gas or flame at the part that contacts the battery cell.

10. The cooling device according to claim 9, wherein the battery cell is a cylindrical battery cell, and the notch has a ring shape which is concentric with the battery cell and has a smaller diameter than the battery cell.

11. The cooling device according to claim 9, wherein the battery cell mount portion includes an upper plate on which the plurality of battery cells is mounted on a surface, and a lower plate bonded to an opposite surface of the upper plate,
wherein each of the upper plate and the lower plate includes an outer protective layer, a reinforcement metal layer and an inner adhesive layer, and
wherein the notch is formed by reducing a thickness of part of the reinforcement metal layer.

12. The cooling device according to claim 1, wherein the battery cell mount portion has an opening configured to melt by at least one of the gas or flame at the part that contacts the battery cell.

13. The cooling device according to claim 12, wherein the battery cell is a cylindrical battery cell, and the opening has a circular shape which is concentric with the battery cell and has a smaller diameter than the battery cell.

14. The cooling device according to claim 12, wherein the battery cell mount portion includes an upper plate on which the plurality of battery cells is mounted on a surface, and a lower plate bonded to an opposite surface of the upper plate,
wherein each of the upper plate and the lower plate includes an outer protective layer, a reinforcement metal layer and an inner adhesive layer, and
wherein the opening is formed by punching the reinforcement metal layer.

15. A battery module, comprising:
the cooling device according to any one of claims 1 to 14; and
a plurality of battery cells mounted on at least one surface of the battery cell mount portion of the cooling device.

16. The battery module according to claim 15, wherein the battery cell includes a vent at a part of the battery cell that contacts the cooling device, the vent configured to vent gas or flame within a body toward the cooling device when abnormal behavior of the battery cell occurs.

17. The battery module according to claim 16, wherein the cooling device is disposed on the plurality of battery cells,
wherein each of the plurality of battery cells is mounted in contact with a lower surface of the cooling device, and
wherein the vent is disposed in contact with the cooling device.

18. The battery module according to claim 17, wherein the cooling device is configured to release a cooling medium within the cooling device through the ruptured part of the battery cell mount portion.

19. The battery module according to claim 15, wherein the battery cell is a cylindrical battery cell with the vent on bottom, the vent configured to vent the gas or flame within a body toward the cooling device when abnormal behavior of the battery cell occurs, and
wherein the cooling device is fusion bonded to a bottom of the battery cell.

20. The battery module according to claim 19, wherein the cooling medium within the cooling device is water, and
wherein the cooling medium is fed into the vented battery cell through the ruptured part of the battery cell mount portion.

21. An energy storage system comprising the battery module according to claim 15.

22. A vehicle comprising the battery module according to claim 15.
